# EUROPEAN PATENT APPLICATION

(11) **EP 4 845 262 A1**
(43) Date of publication of application: **25.11.2026**
(21) Application number: 25747629.1
(22) Date of filing: 21.01.2025
(51) Int. Cl.: H04W 72/0446

(54) **COMMUNICATION METHOD AND COMMUNICATION APPARATUS**

(30) Priority: 30.01.2024 CN 202410132379
(71) Applicant: Huawei Technologies Co., Ltd., Shenzhen, Guangdong 518129 (CN)
(72) Inventor: LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Huawei European IPR
(86) International application number: PCT/CN2025/073571
(87) International publication number: WO 2025/162057

(57) **Abstract**

This application provides a communication method and a communication apparatus. The method includes: receiving first information from a network device via a first RAT, where the first information indicates a time-frequency resource of an SSB of a second RAT; and receiving a PDSCH from the network device via the first RAT, where the time-frequency resource of the SSB of the second RAT is not used to transmit the PDSCH. According to the method, the network device may indicate the time-frequency resource of the SSB of the second RAT to a terminal device via the first RAT, so that the first RAT and the second RAT can share a spectrum.

## Description

This application claims priority to Chinese Patent Application No. 202410132379.5, filed with the China National Intellectual Property Administration on January 30, 2024 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Spectrum sharing may be used to implement transmission of data of new and old standards on a same spectrum through frequency division multiplexing or time division multiplexing, and implement smooth evolution between different standards during transition from the old standard to the new standard. This can accelerate deployment of the new standard while ensuring performance experience of users of the old standard, and can implement maximum spectrum utilization.

In future communication technologies, for example, for spectrum sharing between a new radio (new radio, NR) communication technology and a 6th generation (6th generation, 6G) communication technology, how to implement spectrum sharing is crucial to proper utilization of spectrum resources.

### SUMMARY

This application provides a communication method, to implement proper sharing of spectrum resources.

According to a first aspect, a communication method is provided. The method may be performed by a terminal device, or may be performed by a component (for example, a chip, a circuit, or a chip system) of the terminal device. For ease of understanding, the following uses an example in which the method is performed by the terminal device for description.

The method includes: receiving first information from a network device via a first radio access technology (radio access technology, RAT), where the first information indicates a time-frequency resource of a synchronization signal block (synchronization signal block, SSB) of a second RAT; and receiving a physical downlink shared channel (physical downlink shared channel, PDSCH) from the network device via the first RAT, where the time-frequency resource of the SSB of the second RAT is not used to transmit the PDSCH.

Based on the foregoing technical solution, the network device may indicate the time-frequency resource of the SSB of the second RAT to the terminal device via the first RAT, so that the first RAT and the second RAT can share a spectrum.

In an implementation, the receiving the first information from the network device via the first RAT includes: receiving the first information via a first cell of the first RAT, where a frequency domain resource of the first cell includes M downlink carriers, and M is an integer greater than 1.

Based on the foregoing solution, the first cell includes at least two downlink carriers, so that the terminal device can use a larger spectrum when accessing the first cell. In comparison with carrier aggregation, cell management overheads can be reduced.

In an implementation, the time-frequency resource of the SSB of the second RAT includes time-frequency resources of N SSBs, the time-frequency resources of the N SSBs are in one-to-one correspondence with N downlink carriers in the M downlink carriers, and N is a positive integer.

Based on the foregoing solution, each carrier in the first cell may be configured with at least one SSB of the second RAT, so that a transmission resource of each carrier can be better used, thereby improving resource utilization.

With reference to the first aspect, in some implementations of the first aspect, the M downlink carriers include a first carrier and a second carrier. The method further includes: receiving first carrier information and second carrier information from the network device via the first RAT, where the first carrier information indicates configurations/a configuration of a resource block group (resource block group, RBG) and/or a precoding resource block group (precoding resource block group, PRG) of the first carrier, and the second carrier information indicates configurations/a configuration of an RBG and/or a PRG of the second carrier.

Based on the foregoing solution, the first carrier information and the second carrier information may indicate configurations of RBGs and/or PRGs of carriers of different carrier types. Further, configurations of RBGs and/or PRGs of a shared carrier and a non-shared carrier can be independent of each other.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

According to a second aspect, a communication method is provided. The method may be performed by a network device, or may be performed by a component (for example, a chip, a circuit, or a chip system) of the network device. For ease of understanding, the following uses an example in which the method is performed by the network device for description.

The method includes: sending first information to a terminal device via a first RAT, where the first information indicates a time-frequency resource of an SSB of a second RAT; and sending a PDSCH to the terminal device via the first RAT, where the time-frequency resource of the SSB of the second RAT is not used to transmit the PDSCH.

In an implementation, the sending the first information to the terminal device via the first RAT includes: sending the first information to the terminal device via a first cell of the first RAT, where a frequency domain resource of the first cell includes M downlink carriers, and M is an integer greater than 1.

In an implementation, the time-frequency resource of the SSB of the second RAT includes time-frequency resources of N SSBs, the time-frequency resources of the N SSBs are in one-to-one correspondence with N downlink carriers in the M downlink carriers, and N is a positive integer.

With reference to the second aspect, in some implementations of the second aspect, the M downlink carriers include a first carrier and a second carrier. The method further includes: sending first carrier information and second carrier information to the terminal device via the first RAT, where the first carrier information indicates configurations/a configuration of an RBG and/or a PRG of the first carrier, and the second carrier information indicates configurations/a configuration of an RBG and/or a PRG of the second carrier.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

It should be understood that, for beneficial effects of the second aspect and any implementation of the second aspect, refer to the first aspect and any implementation of the first aspect.

According to a third aspect, a communication method is provided. The method may be performed by a terminal device, or may be performed by a component (for example, a chip, a circuit, or a chip system) of the terminal device. For ease of understanding, the following uses an example in which the method is performed by the terminal device for description.

The method includes: receiving first information from a network device via a first cell of a first RAT, where the first information indicates a first time-frequency resource, a frequency domain resource of the first cell includes M downlink carriers, and M is an integer greater than 1; and receiving a PDSCH from the network device via the first RAT, where the first time-frequency resource is not used to transmit the PDSCH.

Based on the foregoing solution, in a scenario in which the first cell includes a plurality of downlink carriers, the network device may indicate, to a first terminal device, a resource that is not used to transmit the PDSCH, so that the first terminal device can communicate with the network device on a time-frequency resource other than the first time-frequency resource, thereby improving communication efficiency.

In addition, because the first cell includes a plurality of downlink carriers, the terminal device can use a larger spectrum when accessing the first cell. In comparison with carrier aggregation, cell management overheads can be reduced.

In an implementation, the first time-frequency resource includes N time-frequency resources, the N time-frequency resources are in one-to-one correspondence with N downlink carriers in the M downlink carriers, and N is a positive integer.

Based on the foregoing solution, each carrier in the first cell may include at least one resource that is not used to transmit the PDSCH, so that a transmission resource of each carrier can be better used, thereby improving resource utilization.

In an implementation, the first information includes a first bitmap and a second bitmap, the first bitmap indicates a time domain resource in the first time-frequency resource, and the second bitmap indicates a frequency domain resource in the first time-frequency resource.

With reference to the third aspect, in some implementations of the third aspect, the M downlink carriers include a first carrier and a second carrier. The method further includes: receiving first carrier information and second carrier information from the network device via the first RAT, where the first carrier information indicates configurations/a configuration of an RBG and/or a PRG of the first carrier, and the second carrier information indicates configurations/a configuration of an RBG and/or a PRG of the second carrier.

Based on the foregoing solution, the first carrier information and the second carrier information may indicate configurations of RBGs and/or PRGs of carriers of different carrier types. Further, configurations of RBGs and/or PRGs of a shared carrier and a non-shared carrier can be independent of each other.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

According to a fourth aspect, a communication method is provided. The method may be performed by a network device, or may be performed by a component (for example, a chip, a circuit, or a chip system) of the network device. For ease of understanding, the following uses an example in which the method is performed by the network device for description.

The method includes: sending first information to a terminal device via a first cell of a first RAT, where the first information indicates a first time-frequency resource, a frequency domain resource of the first cell includes M downlink carriers, and M is an integer greater than 1; and sending a PDSCH to the terminal device via the first RAT, where the first time-frequency resource is not used to transmit the PDSCH.

In an implementation, the first time-frequency resource includes N time-frequency resources, the N time-frequency resources are in one-to-one correspondence with N downlink carriers in the M downlink carriers, and N is a positive integer.

In an implementation, the first information includes a first bitmap and a second bitmap, the first bitmap indicates a time domain resource in the first time-frequency resource, and the second bitmap indicates a frequency domain resource in the first time-frequency resource.

With reference to the fourth aspect, in some implementations of the fourth aspect, the M downlink carriers include a first carrier and a second carrier. The method further includes: sending first carrier information and second carrier information to the terminal device via the first RAT, where the first carrier information indicates configurations/a configuration of an RBG and/or a PRG of the first carrier, and the second carrier information indicates configurations/a configuration of an RBG and/or a PRG of the second carrier.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

It should be understood that, for beneficial effects of the fourth aspect and any implementation of the fourth aspect, refer to the third aspect and any implementation of the third aspect.

According to a fifth aspect, a communication apparatus is provided. The apparatus may be a terminal device, or may be a component (for example, a chip, a circuit, or a chip system) of the terminal device.

The apparatus includes an interface unit, configured to receive first information from a network device via a first RAT, where the first information indicates a time-frequency resource of an SSB of a second RAT. The interface unit is further configured to receive a PDSCH from the network device via the first RAT, where the time-frequency resource of the SSB of the second RAT is not used to transmit the PDSCH.

In an implementation, the interface unit is specifically configured to receive the first information via a first cell of the first RAT, where a frequency domain resource of the first cell includes M downlink carriers, and M is an integer greater than 1.

In an implementation, the time-frequency resource of the SSB of the second RAT includes time-frequency resources of N SSBs, the time-frequency resources of the N SSBs are in one-to-one correspondence with N downlink carriers in the M downlink carriers, and N is a positive integer.

With reference to the fifth aspect, in some implementations of the fifth aspect, the M downlink carriers include a first carrier and a second carrier. The interface unit is further configured to receive first carrier information and second carrier information from the network device via the first RAT, where the first carrier information indicates configurations/a configuration of an RBG and/or a PRG of the first carrier, and the second carrier information indicates configurations/a configuration of an RBG and/or a PRG of the second carrier.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

According to a sixth aspect, a communication apparatus is provided. The apparatus may be a network device, or may be a component (for example, a chip, a circuit, or a chip system) of the network device.

The apparatus includes an interface unit, configured to send first information to a terminal device via a first RAT, where the first information indicates a time-frequency resource of an SSB of a second RAT. The interface unit is further configured to send a PDSCH to the terminal device via the first RAT, where the time-frequency resource of the SSB of the second RAT is not used to transmit the PDSCH.

In an implementation, the interface unit is specifically configured to send the first information to the terminal device via a first cell of the first RAT, where a frequency domain resource of the first cell includes M downlink carriers, and M is an integer greater than 1.

In an implementation, the time-frequency resource of the SSB of the second RAT includes time-frequency resources of N SSBs, the time-frequency resources of the N SSBs are in one-to-one correspondence with N downlink carriers in the M downlink carriers, and N is a positive integer.

With reference to the sixth aspect, in some implementations of the sixth aspect, the M downlink carriers include a first carrier and a second carrier. The interface unit is specifically configured to send first carrier information and second carrier information to the terminal device via the first RAT, where the first carrier information indicates configurations/a configuration of an RBG and/or a PRG of the first carrier, and the second carrier information indicates configurations/a configuration of an RBG and/or a PRG of the second carrier.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

According to a seventh aspect, a communication apparatus is provided. The apparatus may be a terminal device, or may be a component (for example, a chip, a circuit, or a chip system) of the terminal device.

The apparatus includes an interface unit, configured to receive first information from a network device via a first cell of a first RAT, where the first information indicates a first time-frequency resource, a frequency domain resource of the first cell includes M downlink carriers, and M is an integer greater than 1. The interface unit is further configured to receive a PDSCH from the network device via the first RAT, where the first time-frequency resource is not used to transmit the PDSCH.

In an implementation, the first time-frequency resource includes N time-frequency resources, the N time-frequency resources are in one-to-one correspondence with N downlink carriers in the M downlink carriers, and N is a positive integer.

In an implementation, the first information includes a first bitmap and a second bitmap, the first bitmap indicates a time domain resource in the first time-frequency resource, and the second bitmap indicates a frequency domain resource in the first time-frequency resource.

With reference to the seventh aspect, in some implementations of the seventh aspect, the M downlink carriers include a first carrier and a second carrier. The interface unit is further configured to receive first carrier information and second carrier information from the network device via the first RAT, where the first carrier information indicates configurations/a configuration of an RBG and/or a PRG of the first carrier, and the second carrier information indicates configurations/a configuration of an RBG and/or a PRG of the second carrier.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

According to an eighth aspect, a communication apparatus is provided. The apparatus may be a network device, or may be a component (for example, a chip, a circuit, or a chip system) of the network device.

The apparatus includes an interface unit, configured to send first information to a terminal device via a first cell of a first RAT, where the first information indicates a first time-frequency resource, a frequency domain resource of the first cell includes M downlink carriers, and M is an integer greater than 1. The interface unit is further configured to send a PDSCH to the terminal device via the first RAT, where the first time-frequency resource is not used to transmit the PDSCH.

In an implementation, the first time-frequency resource includes N time-frequency resources, the N time-frequency resources are in one-to-one correspondence with N downlink carriers in the M downlink carriers, and N is a positive integer.

In an implementation, the first information includes a first bitmap and a second bitmap, the first bitmap indicates a time domain resource in the first time-frequency resource, and the second bitmap indicates a frequency domain resource in the first time-frequency resource.

With reference to the eighth aspect, in some implementations of the eighth aspect, the M downlink carriers include a first carrier and a second carrier. The interface unit is further configured to send first carrier information and second carrier information to the terminal device via the first RAT, where the first carrier information indicates configurations/a configuration of an RBG and/or a PRG of the first carrier, and the second carrier information indicates configurations/a configuration of an RBG and/or a PRG of the second carrier.

In an implementation, the first carrier information indicates configurations/a configuration of an RBG and/or a PRG of a first carrier type, the second carrier information indicates configurations/a configuration of an RBG and/or a PRG of a second carrier type, and the first carrier type is different from the second carrier type.

According to a ninth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a terminal device or a network device.

In another implementation, the apparatus is a chip, a chip system, or a circuit used in a terminal device or a network device.

According to a tenth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to an eleventh aspect, a processor is provided, and is configured to perform the method provided in the foregoing aspects.

Unless otherwise specified, or if operations such as sending and obtaining/receiving related to the processor do not conflict with actual functions or internal logic of the operations in related descriptions, the operations may be understood as operations such as an output, receiving, and an input of the processor, or may be understood as sending and receiving operations performed by a radio frequency circuit and an antenna. This is not limited in this application.

According to a twelfth aspect, a computer-readable storage medium is provided. The computer-readable medium stores program code to be executed by a device, and the program code is used to perform the method provided in any one of the foregoing aspects or the implementations of the foregoing aspects.

According to a thirteenth aspect, a computer program product including instructions is provided. When the computer program product runs on a computer, the computer is caused to perform the method provided in any one of the foregoing aspects or the implementations of the foregoing aspects.

According to a fourteenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a fifteenth aspect, a computer program is provided. When the computer program is run on a computer, the method provided in any one of the foregoing aspects or the implementations of the foregoing aspects is performed.

According to a sixteenth aspect, a communication system is provided, and includes the foregoing terminal device and the foregoing network device.

It should be understood that, for beneficial effects of the fifth aspect to the sixteenth aspect and any implementation of the fifth aspect to the sixteenth aspect, refer to the first aspect to the fourth aspect and any implementation of the first aspect to the fourth aspect.

### BRIEF DESCRIPTION OF DRAWINGS

FIG. 1 is a diagram of an architecture of a communication system 1000 to which an embodiment of this application is applied;
FIG. 2 is a diagram of carrier aggregation;
FIG. 3 is a diagram of an SSB;
FIG. 4 is a diagram of an SSB time domain sending pattern;
FIG. 5 is a diagram of BWPs included in a carrier;
FIG. 6 is a schematic flowchart of a communication method according to this application;
FIG. 7 is a diagram of carrier sharing according to an embodiment of this application; and
FIG. 8 and FIG. 9 are diagrams of communication apparatuses according to embodiments of this application.

### DESCRIPTION OF EMBODIMENTS

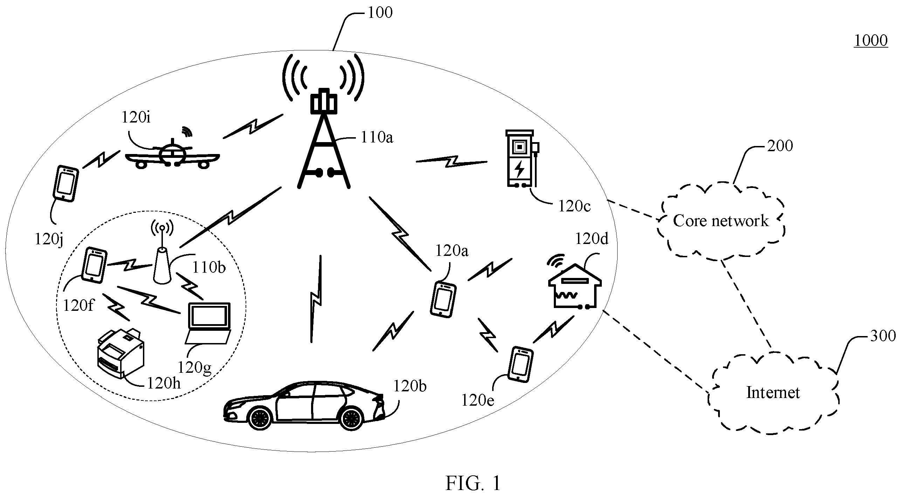

FIG. 1 is a diagram of an architecture of a communication system 1000 to which an embodiment of this application is applied. As shown in FIG. 1, the communication system includes a radio access network (radio access network, RAN) 100. Optionally, the communication system 1000 may further include a core network 200 and an internet 300.

The RAN 100 may include at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner, and the RAN nodes may be connected to each other in a wired or wireless manner. The RAN node 110 is connected to the core network 200 in a wireless or wired manner. A core network device in the core network 200 and the RAN node 110 in the RAN 100 may be different independent physical devices. Alternatively, some or all logical functions of a core network device and some or all logical functions of the RAN node may be integrated into a same physical device.

The RAN 100 may be an evolved universal terrestrial radio access (evolved universal terrestrial radio access, E-UTRA) system, an NR system, a 6th generation (6th generation, 6G) radio access system, or a future radio access system defined in the 3rd generation partnership project (3rd generation partnership project, 3GPP), or may be a wireless fidelity (wireless fidelity, Wi-Fi) system. The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6G mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help the terminal implement radio access, and different RAN nodes separately implement some functions of the base station. For example, the RAN node may be a central unit (central unit, CU), or may be a distributed unit (distributed unit, DU) or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a function of receiving and sending a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may further be classified into two types of RAN nodes: a CU-control plane and a CU-user plane.

In different systems, the RAN node may have different names. For example, in an O-RAN system, the CU may also be referred to as an open CU (open CU, O-CU), the DU may also be referred to as an open DU (open DU, O-DU), and the RU may be referred to as an open RU (open RU, O-RU). In this application, the RAN node may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses an example in which a network device or a base station is used as a RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j that accesses the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be simultaneously performed by using a spectrum below 6 GHz and a spectrum above 6 GHz. A spectrum resource used for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (discrete Fourier transform-spread-OFDM, DFT-s-OFDM) symbol. Unless otherwise specified, symbols in embodiments of this application are time domain symbols.

In this specification, a PDSCH is merely used as an example of a downlink data channel. In different systems and different scenarios, a data channel may have different names. This is not limited in embodiments of this application.

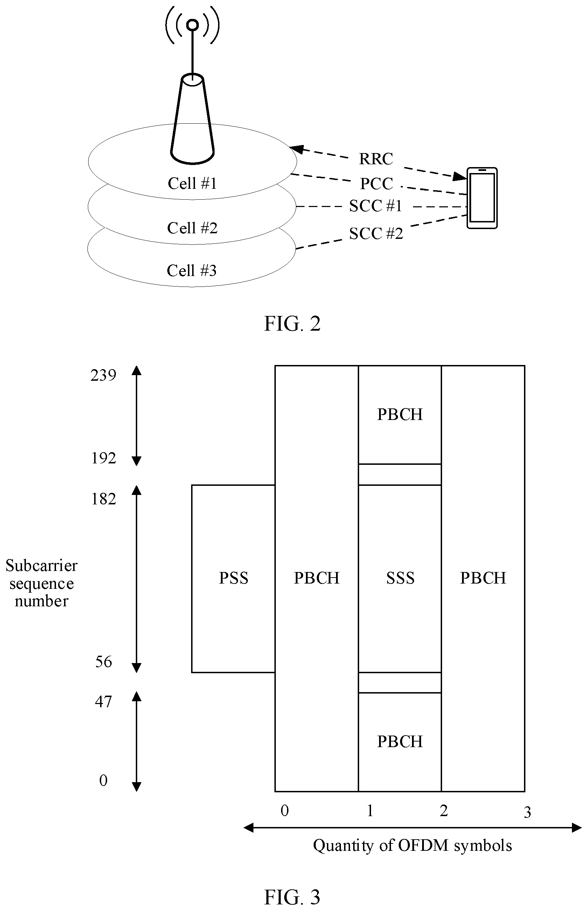

For ease of understanding embodiments of this application, some basic concepts in this application are briefly described.
1. Cell: A cell is a group of resource sets managed by a base station, including a frequency domain resource and a space domain resource. The frequency domain resource of the cell includes an uplink frequency domain resource and/or a downlink frequency domain resource. The space domain resource of the cell may be a space domain resource corresponding to one beam or a group of beams, which may also be understood as that one cell corresponds to one specific physical coverage area. In embodiments of this application, different cells may be managed by different base stations. For example, a cell #1 and a cell #2 may be managed by different base stations. In this case, the cell #1 and the cell #2 may be considered non co-sited. The cell #1 and the cell #2 may alternatively be managed by a same base station, and have a same baseband processing unit and/or a same radio frequency processing unit. This is not limited in this application.
2. Carrier aggregation (carrier aggregation, CA): Carrier aggregation is to aggregate two or more component carriers (component carriers, CCs) to support a larger transmission bandwidth. A CA technology in NR is used to increase a transmission bandwidth of a single user. Specifically, a carrier aggregation technology may be used to implement integration of multifrequency resources. For example, spectrum resources of a same frequency band or different frequency bands may be aggregated by using the CA technology and provided for a terminal to use, to improve resource utilization of an entire network and user experience. For ease of understanding, the CA technology is briefly described with reference to FIG. 2.

FIG. 2 is a diagram of a carrier aggregation scenario. It can be learned from FIG. 2 that a component carrier corresponding to a cell #1, a component carrier corresponding to a cell #2, and a component carrier corresponding to a cell #3 are aggregated to provide a service for a terminal, where the cell #1 is a primary cell (primary cell, PCell), and the cell #2 and the cell #3 are secondary cells (secondary cells, SCells). The PCell is a cell to which the terminal establishes an initial connection, or a cell to which the terminal re-establishes a radio resource control (radio resource control, RRC) connection. The PCell is responsible for RRC communication with the terminal. A component carrier corresponding to the PCell is referred to as a primary carrier (primary component carrier, PCC) (for example, a PCC shown in FIG. 2). A downlink (downlink, DL) carrier of the PCell is referred to as a DL PCC, and an uplink (uplink, UL) carrier of the PCell is referred to as a UL PCC. The SCell is added during RRC reconfiguration, and is configured to provide an additional radio resource. There is no RRC communication between the SCell and the UE. A component carrier corresponding to the SCell is referred to as a secondary carrier (secondary component carrier, SCC) (for example, an SCC #1 and an SCC #2 shown in FIG. 2). A downlink carrier of the SCell is referred to as a DL SCC, and an uplink carrier of the SCell is referred to as a UL SCC.

### 3. Synchronization signal block (synchronization signal block, SSB)

An SSB may also be referred to as a synchronization signal/physical broadcast channel (physical broadcast channel, PBCH) block (block). In 5G, the SSB includes synchronization signals and PBCHs. Specifically, the synchronization signals include a primary synchronization signal (primary synchronization signal, PSS) and a secondary synchronization signal (secondary synchronization signal, SSS).

FIG. 3 is a diagram of an SSB. As shown in FIG. 3, one SSB occupies four contiguous OFDM symbols in time domain, and occupies 20 contiguous resource blocks (resource blocks, RBs) in frequency domain. A 1^{st} symbol of the SSB is a PSS, and a 3^{rd} symbol of the SSB is an SSS. The PSS and the SSS each occupy 127 subcarriers, namely, subcarriers 56 to 182 in FIG. 3. PBCHs are distributed on a 2^{nd} symbol to a 4^{th} symbol of the SSB, and on the 2^{nd} symbol and the 4^{th} symbol, the PBCHs occupy 240 subcarriers, namely, subcarriers 0 to 239 in FIG. 3. Some resource elements (resource elements, REs) on either side of the SSS of the 3^{rd} symbol are not used, and the PBCHs are respectively sent on two sides of the SSS by using 48 REs, which are respectively subcarriers 0 to 47 and subcarriers 192 to 239 in FIG. 3. The PBCH is mainly used to carry system information.

One function of the SSB is cell access. Specifically, master information block (master information block, MIB) information may be received by using the SSB, so that a system information block (system information block, SIB) associated with the SSB can be obtained for cell access. Because the SSB includes the PSS and the SSS, and the PBCH includes a PBCH demodulation reference signal (demodulation reference signal, DMRS), the SSB may also be used by a terminal device to perform time-frequency tracking (or referred to as time-frequency synchronization), beam management, radio resource management (radio resource management, RRM) measurement, radio link monitoring (radio link monitoring, RLM) measurement, channel state information (channel state information, CSI) measurement, and the like.

### 4. Synchronization signal (synchronization signal, SS) burst (burst) set

One SS burst set represents a set of one or more SSBs. One SS burst set is located in a first half-frame or a second half-frame of a radio frame. A periodicity of an SSB may also be considered as a periodicity of an SS burst set. A maximum quantity Lmax of SSBs included in one SS burst set represents a quantity of SSBs that may be sent by a network device in one SS burst set, and a quantity of SSBs actually sent in one SS burst set is less than or equal to Lmax. Lmax is related to a frequency range. For example, when a carrier frequency is in an FR1 and is less than or equal to 3 GHz, Lmax=4. When the carrier frequency is in the FR1 and is greater than 3 GHz, Lmax=8. When the carrier frequency is in an FR2, Lmax=64.

A beam is a spatial communication resource. The network device or the terminal device may perform beamforming on a transmit beam in an analog, digital, or hybrid manner by using an antenna array. Different beams are usually considered as resources in different spaces. Therefore, different beams may be used to send same information to cover a plurality of different space areas, or may be used to send different information to maximize space resources utilization.

Beams may be classified into a transmit beam and a receive beam of the network device, and a transmit beam and a receive beam of the terminal device.

SSBs in an NR network are usually sent by using the foregoing plurality of beams. The SSB has a sending periodicity. At a low frequency (or referred to as a frequency range 1 (Frequency Range 1, FR1)), the periodicity is usually 20 ms. In each SSB periodicity, the network device may send a plurality of SSBs on different beams in a time division manner in a short time length. The short time length is referred to as an SS burst. In an NR system, based on different operating frequency bands, SSBs on different beams are sent based on different time domain patterns.

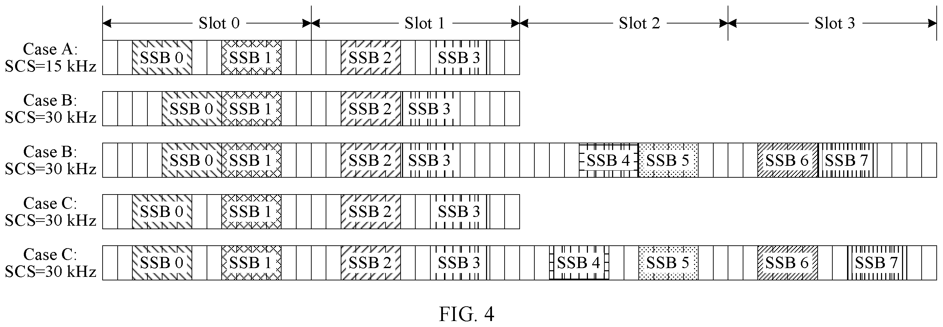

FIG. 4 is a diagram of an SSB time domain sending pattern. As shown in FIG. 4, in a case A, a subcarrier spacing is 15 kHz, and a length of one SS burst is 2 ms. To be specific, a network device may send SSBs in two slots each with a length of 1 ms. In the SS burst, SSBs in a maximum of four different directions, namely, an SSB 0, an SSB 1, an SSB 2, and an SSB 3 in the figure, may be sent. A filling part in the figure is a symbol location at which the SSB can be sent. It should be understood that, in one SS burst, the network device does not necessarily need to send the SSBs in all the four directions, and the network device may configure, by using a system message, a quantity of actually to-be-sent SSBs and a symbol location used for sending the SSB. For example, the network device may send only the SSB 0 and the SSB 1, or may send only the SSB 1 and the SSB 3.

As shown in FIG. 4, in a case B and a case C, a subcarrier spacing is 30 kHz, and two time domain sending patterns shown in the figure may be respectively supported. When the subcarrier spacing is 30 kHz, a length of one SS burst is 2 ms, and four slots each with a length of 0.5 ms are included. In FIG. 4, each filling pattern represents an SSB in one beam direction. The network device may select to send an SSB/SSBs on one beam direction , two beam directions, four beam directions, or eight beam directions. In one SS burst, SSBs in a maximum of eight different directions may be sent. An SSB in each beam direction occupies four OFDM symbols on a time domain resource. Content carried in the four OFDM symbols of the SSB may be shown in FIG. 3.

When the terminal device is powered on and camps on a cell or switches to a cell, the terminal device may measure a plurality of SSBs of the cell in one SSB periodicity, determine a beam with best receive quality, and use beam quality of the measured SSB as a reference for beam selection in subsequent cell access and uplink/downlink data transmission.

5. Bandwidth part (bandwidth part, BWP): A BWP is a segment of contiguous frequency resources on a carrier. One or more BWPs may be configured on one carrier, and a bandwidth of a BWP on one carrier is less than or equal to a bandwidth of the carrier. After a BWP is configured and activated, the BWP is referred to as an active BWP.

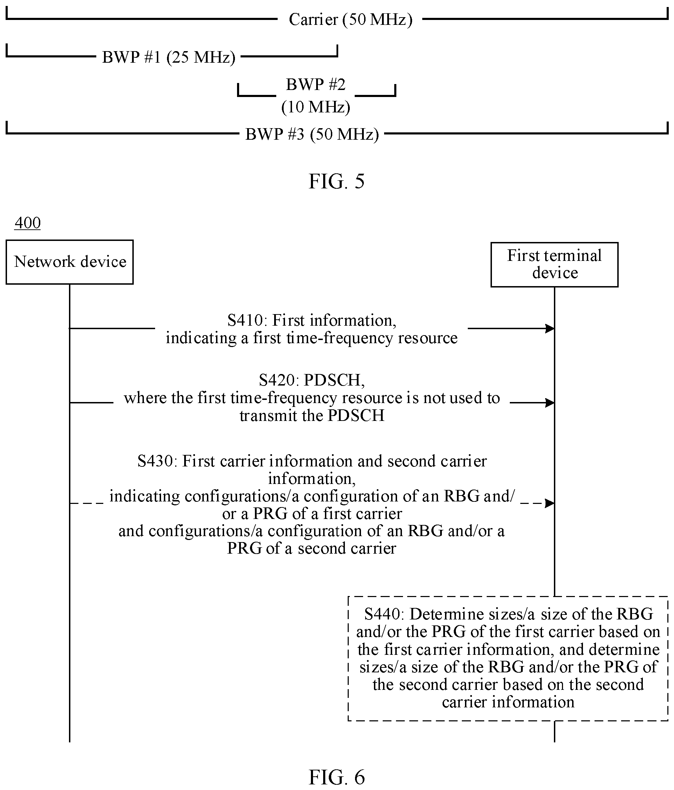

For example, one terminal has one active downlink BWP (active downlink BWP) on one downlink carrier, and has one active uplink BWP (active uplink BWP) on one uplink carrier. Usually, uplink data and control information sent by the terminal are sent in the active uplink BWP, and downlink data and control information are received in the active downlink BWP. For ease of understanding, a form in which one carrier includes BWPs is briefly described with reference to FIG. 5.

FIG. 5 is a diagram of BWPs included in a carrier. It can be learned from FIG. 5 that three BWPs are configured in a 50 MHz carrier: a BWP #1, a BWP #2, and a BWP #3. A bandwidth of the BWP #1 is 25 MHz, a bandwidth of the BWP #2 is 10 MHz, and a bandwidth of the BWP #3 is 50 MHz. An active BWP may be the BWP #2.

In NR Rel-15, a maximum channel bandwidth (channel bandwidth) of each carrier is 400 MHz, and a maximum bandwidth supported by a terminal device may be less than 400 MHz. Each BWP corresponds to a numerical configuration (numerology), a bandwidth (bandwidth), and a frequency domain location (frequency location).

### 6. RBG

An RBG is a group of contiguous centralized physical resource blocks, and the RBG is a unit for allocating a traffic channel resource.

### 7. PRG

Resources for which same precoding is used may be referred to as a PRG, or referred to as a physical resource block (physical resource block, PRB) bundling (bundling). A granularity of the PRG may also be referred to as a granularity of the PRB bundling. The granularity of the PRG may be a PRB, or may be a resource of another granularity. This is not limited. For example, if the granularity of the PRG is a PRB, same precoding may be used for a plurality of PRBs in frequency domain. In this way, a receive end may perform channel estimation by using the plurality of PRBs together, thereby improving accuracy of channel estimation. In this case, one PRG may include the foregoing plurality of PRBs. Currently, it is specified in NR that one or more contiguous PRBs are regarded as a PRB bundling or a PRG, and a quantity of contiguous PRBs may be {2, 4, a contiguous scheduled bandwidth}.

With evolution of communication technologies, a communication technology corresponding to a new standard is introduced. Spectrum sharing may be used to implement transmission of data of new and old standards on a same spectrum through frequency division multiplexing or time division multiplexing, and implement smooth evolution between different standards during transition from the old standard to the new standard. This can accelerate deployment of the new standard while ensuring performance experience of users of the old standard. Spectrum resources are flexibly occupied between the new standard and the old standard, so that spectrum utilization can be maximized.

For example, in an early stage of NR network construction, operators expect to quickly introduce an NR network. However, an overall NR terminal penetration rate is low, and NR traffic growth rates in different areas are inconsistent. As a result, it is difficult to plan spectrum refarming (refarming) of long term evolution (long term evolution, LTE) frequency bands for NR, affecting an NR network construction progress. In addition, NR frequency bands include an FR1 and an FR2. The FR1 includes a C-band (4 to 8 GHz), and the FR2 includes a frequency band above 6 GHz, for example, a millimeter wave frequency band. However, coverage of a high frequency band is poor. Therefore, some low frequency bands of LTE are expected to be used for NR for communication, to ensure a coverage requirement. Therefore, technical personnel introduce dynamic spectrum sharing (dynamic spectrum sharing, DSS) between LTE and NR. Data of LTE and NR may be transmitted on a same spectrum through frequency division multiplexing or time division multiplexing, so that performance experience of LTE users can be ensured, an impact on existing LTE users can be minimized, and NR deployment can be accelerated.

In future communication technologies, for example, for spectrum sharing between an NR communication technology and a 6G communication technology, how to implement spectrum sharing is crucial to proper utilization of spectrum resources.

In view of this, this application provides a communication method and a communication apparatus, to implement proper sharing of spectrum resources in a scenario in which one cell includes a plurality of carriers.

It should be understood that the communication method provided in embodiments of this application may be applied to a system that performs communication by using a multi-antenna technology, for example, the communication system 1000 shown in FIG. 1. The communication system may include at least one network device and at least one terminal device. The network device may communicate with the terminal device by using the multi-antenna technology.

It should be further understood that a specific structure of an execution body of the method provided in embodiments of this application is not particularly limited in embodiments described below, provided that the execution body can run a program that records code of the method provided in embodiments of this application to perform communication according to the method provided in embodiments of this application. For example, the method provided in embodiments of this application may be performed by a terminal device and a network device, or may be performed by functional modules that are in the terminal device and the network device and that can invoke and execute a program.

FIG. 6 is a schematic flowchart of a communication method 400 according to this application. As shown in FIG. 6, the method 400 includes the following steps.

S410: A network device sends first information to a first terminal device via a first RAT, and correspondingly, the first terminal device receives the first information.

In this application, a RAT is also referred to as an air interface access technology. The RAT connects a terminal to a network node by using a wireless medium, to implement information transmission between the terminal and a network. The RAT includes communication protocols, and the communication protocols are protocols to be followed by signals transmitted through a radio channel. Specifically, the RAT may include 3GPP access technologies (for example, LTE, NR, or 6G) and non-3GPP (non-3GPP) access technologies (for example, Wi-Fi or worldwide interoperability for microwave access (worldwide interoperability for microwave access, WiMAX)).

In this application, the first terminal device communicates with the network device via the first RAT. The first RAT may be a 3GPP access technology. For example, the first RAT is LTE, NR, or 6G.

It should be understood that the first RAT may alternatively be an access technology in future communication technologies. This is not limited in this application.

The first information indicates a first time-frequency resource.

S420: The network device sends a PDSCH to the first terminal device via the first RAT, and correspondingly, the first terminal device receives the PDSCH.

The first time-frequency resource is not used to transmit the PDSCH. In other words, rate matching is performed around the first time-frequency resource. Before sending the PDSCH to the first terminal device, the network device may further send downlink control information to the first terminal device. The downlink control information is used to schedule the PDSCH, and the downlink control information indicates a second time-frequency resource. That the first time-frequency resource is not used to transmit the PDSCH may also be understood as that an RE, in the second time-frequency resource, that overlaps the first time-frequency resource is not used to transmit the PDSCH.

In this application, the first time-frequency resource indicated by the network device to the first terminal device is a resource that is not used to transmit the PDSCH, so that the first terminal device can communicate with the network device on a time-frequency resource other than the first time-frequency resource, thereby improving communication efficiency.

The following provides some examples of the first time-frequency resource.

Example 1: The first time-frequency resource includes a time-frequency resource of an SSB of a second RAT, or the first time-frequency resource may be used to transmit an SSB of a second RAT.

The second RAT may also be a 3GPP access technology. For example, the second RAT is LTE, NR, or 6G.

Optionally, the first RAT is different from the second RAT. For example, the first RAT is 6G, and the second RAT is NR.

Optionally, a second terminal device communicates with the network device via the second RAT. In other words, the second terminal device and the first terminal device are terminal devices of different standards. In this case, the SSB of the second RAT may be understood as an SSB transmitted by the network device to the second terminal device, and the time-frequency resource of the SSB of the second RAT may be understood as a time-frequency resource used when the network device transmits the SSB to the second terminal device.

A structure of the SSB of the second RAT may be shown in FIG. 3.

In this example, the first information may include a time domain location, a frequency domain location, a subcarrier spacing, power, and the like of the SSB of the second RAT.

For example, the second RAT is NR. An SSB of NR occupies a fixed quantity of RBs in frequency domain, and also occupies a fixed quantity of symbols in time domain (as shown in FIG. 3). However, a location of the SSB of NR in frequency domain is random, and sending time of the SSB of NR in time domain is also flexible and variable considering a relationship between the SSB of NR and a beam. Therefore, a time-frequency location of the SSB of NR may be indicated to the first terminal device by using the first information, so that the first terminal device can determine that the first time-frequency resource is not used to transmit the PDSCH transmitted by the network device to the first terminal device.

In an implementation of this example, the time domain location of the SSB of the second RAT may be indicated by using an SSB periodicity and an SSB index in an SS burst set, as shown in FIG. 4.

For example, in this example, an information element structure of the first information is as follows:

```
         RateMatchPatternNR-SSB ::= SEQUENCE {
         ssbSubcarrierSpacing ENUMERATED {kHz15, kHz30, kHz60, kHz120, kHz240 }
         absoluteFrequencySSB ARFCN-ValueNR
         ssb-PositionsInBurst SEQUENCE {
         inOneGroup BIT STRING (SIZE (8)),
         groupPresence BIT STRING (SIZE (8)) OPTIONAL
         },
         ssb-PeriodicityServingCell ENUMERATED {ms5, ms10, ms20, ms40, ms80, ms160},
         ss-PBCH-BlockPower INTEGER (-60..50),
         }
```

ssb-PositionsInBurst may include the following content:

```
         ssb-PositionsInBurst CHOICE {
         shortBitmap BIT STRING (SIZE (4)),
         mediumBitmap BIT STRING (SIZE (8)),
         longBitmap BIT STRING (SIZE (64))
         }
```

Optionally, the time domain location of the SSB of the second RAT may alternatively be indicated by using a time domain start location and a time length occupied by the SSB. Similarly, the frequency domain location of the SSB of the second RAT may be indicated by using a frequency domain start location and a frequency range occupied in frequency domain.

Based on the foregoing solution, the network device may indicate the time-frequency resource of the SSB of the second RAT to the first terminal device via the first RAT, so that the first RAT and the second RAT can share a spectrum, thereby improving spectrum resource utilization.

Optionally, in this example, the method 200 further includes: The first terminal device determines the time-frequency resource of the SSB of the second RAT based on the first information.

Specifically, the first terminal device may determine, based on a communication protocol in the second RAT, a specific location occupied by the time-frequency resource of the SSB of the second RAT.

Example 2: The first time-frequency resource is a time-frequency resource that is not used to transmit the PDSCH, or the first time-frequency resource is a time-frequency resource used by the first terminal device to perform rate matching.

It should be understood that, in Example 2, a purpose of the first time-frequency resource is similar to that in Example 1, and the first time-frequency resource also includes a time-frequency resource of an SSB of a second RAT, or the first time-frequency resource is also used to transmit an SSB of a second RAT. A difference from Example 1 lies in that the first terminal device cannot determine a relationship between the first time-frequency resource and the SSB of the second RAT, and directly uses the first time-frequency resource as a resource for rate matching.

In this example, the first information may include a frequency domain location, a time domain location, a periodicity, a subcarrier spacing, and the like.

Specifically, the first information may include a first bitmap and a second bitmap, the first bitmap indicates a time domain resource in the first time-frequency resource, and the second bitmap indicates a frequency domain resource in the first time-frequency resource.

A quantity of bits of the first bitmap may be determined based on a quantity of symbols within 5 ms.

For example, when a maximum subcarrier spacing is 120 kHz, there are a total of 40 slots (slots) within 5 ms. One slot includes 14 symbols, in other words, there are a total of 560 symbols within 5 ms. Therefore, the first bitmap may include 560 bits. Similarly, when the maximum subcarrier spacing is 240 kHz, the first bitmap may include 1120 bits. When the maximum subcarrier spacing is 480 kHz, the first bitmap may include 2240 bits. When the maximum subcarrier spacing is 960 kHz, the first bitmap may include 4480 bits. When the maximum subcarrier spacing is 60 kHz, the first bitmap may include 280 bits.

For example, 0 in the first bitmap may indicate that a symbol does not belong to the first time-frequency resource (or is used to transmit the PDSCH, or is not used for rate matching), and 1 in the first bitmap may indicate that a symbol belongs to the first time-frequency resource (or is not used to transmit the PDSCH, or is used for rate matching).

A quantity of bits of the second bitmap may be determined based on a maximum quantity of RBs on a carrier. For example, if a bandwidth of the carrier is 100 MHz, and the carrier includes 273 RBs, the second bitmap may include 273 bits.

For example, 0 in the second bitmap may indicate that an RB does not belong to the first time-frequency resource (or is used to transmit the PDSCH, or is not used for rate matching), and 1 in the second bitmap may indicate that an RB belongs to the first time-frequency resource (or is not used to transmit the PDSCH, or is used for rate matching).

The first time-frequency resource may be at a granularity of a BWP, or one or more first time-frequency resources are configured for each BWP. In this case, a subcarrier spacing of the first time-frequency resource may be the same as a subcarrier spacing of the BWP. In this case, a quantity of bits of the second bitmap is determined based on a maximum quantity of RBs in the BWP.

For example, in this example, an information element structure of the first information is as follows:

```
         RateMatchPattern ::= SEQUENCE {
         rateMatchPatternId RateMatchPatternId,
         resourceBlocks BIT STRING (SIZE (275)), symbolsInResourceBlock BIT STRING
 (SIZE (560))
         PeriodicityServingCell ENUMERATED {ms5, ms10, ms20, ms40, ms80, ms160},
         ssbSubcarrierSpacing ENUMERATED {kHz15, kHz30, kHz60, kHz120}
         }
```

Based on the foregoing solution, the network device may indicate, to the first terminal device, a resource that is not used to transmit the PDSCH, so that the first terminal device can communicate with the network device on a time-frequency resource other than the first time-frequency resource, thereby improving communication efficiency.

Optionally, the first information is carried in RRC signaling.

In an implementation, S410 specifically includes: The network device sends the first information to the first terminal device via a first cell of the first RAT.

In this application, the first cell is a cell managed by the network device.

It should be understood that the cell managed by the network device may include a cell other than the first cell, or may include only the first cell. This is not limited.

The first cell includes M downlink carriers, and M is an integer greater than 1.

It should be understood that, that the first cell includes the M downlink carriers may be understood as that M carriers used for downlink signal transmission are configured in the first cell. The M downlink carriers may belong to one frequency band or may belong to a plurality of frequency bands.

Based on the foregoing solution, the first cell includes at least two downlink carriers, so that the terminal device can use a larger spectrum when accessing the first cell. In comparison with carrier aggregation, cell management overheads can be reduced.

Optionally, in Example 2, the first time-frequency resource includes N time-frequency resources, the N time-frequency resources are in one-to-one correspondence with N downlink carriers in the M downlink carriers, and N is a positive integer.

It should be understood that the N time-frequency resources in the first time-frequency resource may be understood as N time-frequency resources that are not used to transmit the PDSCH.

Specifically, that the N time-frequency resources are in one-to-one correspondence with the N downlink carriers in the M downlink carriers may be understood as follows: The M downlink carriers may include the N downlink carriers, and each of the N downlink carriers includes a frequency domain resource in one time-frequency resource that is not used to transmit the PDSCH.

The M downlink carriers include frequency domain resources in the first time-frequency resource.

Optionally, in Example 1, the time-frequency resource of the SSB of the second RAT may include time-frequency resources of N SSBs, in other words, N time-frequency resources are the time-frequency resources of the N SSBs, and the time-frequency resources of the N SSBs are in one-to-one correspondence with the N downlink carriers in the M downlink carriers.

Specifically, the M downlink carriers may include the N downlink carriers, and each of the N downlink carriers includes a frequency domain resource in one time-frequency resource of an SSB of the second RAT.

The N downlink carriers in the M downlink carriers may be understood as N shared carriers, and spectra of the N downlink carriers are shared by the first RAT and the second RAT.

For example, the time-frequency resources of the N SSBs may also be referred to as N time-frequency resources for rate matching. When the second RAT is 5G, signaling indicating the time-frequency resources of the N SSBs may be as follows:

```
         RateMatchPatternNR-SSBList ::= SEQUENCE (SIZE (1..maxNR-SSB-Patterns)) OF
 RateMatchPatternNR-SSB
```

A value of maxNR-SSB-Patterns is N, where N is a positive integer, for example, 1, 3, or 6.

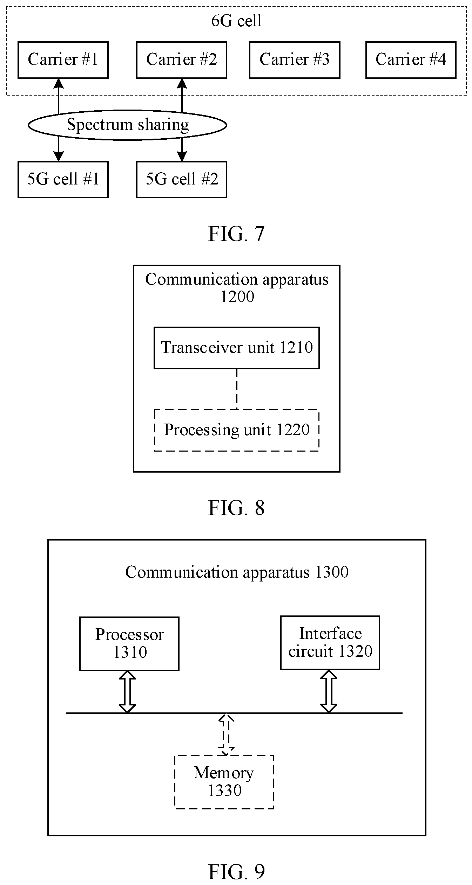

FIG. 7 is a diagram of carrier sharing according to an embodiment of this application. As shown in FIG. 7, the first RAT is 6G, the second RAT is 5G, M is equal to 3, and N=2. Specifically, a 6G cell (an example of the first cell) includes four downlink carriers, which are denoted as a carrier #1, a carrier #2, a carrier #3, and a carrier #4. Both the carrier #1 and the carrier #2 are shared carriers of 5G and 6G. The carrier #1 corresponds to a 5G cell #1, the carrier #2 corresponds to a 5G cell #2, and one 5G SSB is separately configured on the carrier #1 and the carrier #2. The carrier #3 and the carrier #4 are 6G dedicated carriers. Therefore, the first time-frequency resource includes time-frequency resources of two 5G SSBs, and two downlink carriers in the four downlink carriers are in one-to-one correspondence with the time-frequency resources of the two 5G SBBs. The carrier #1 corresponds to a time-frequency resource of one 5G SBB, and the carrier #2 corresponds to a time-frequency resource of one 5G SBB.

Based on the foregoing solution, each carrier in the first cell may be configured with at least one SSB of the second RAT, so that a transmission resource of each carrier can be better used, thereby improving resource utilization.

It should be understood that the foregoing descriptions are provided by using an example in which each carrier includes one time-frequency resource that is not used to transmit the PDSCH. However, a quantity of time-frequency resources included in each carrier that are not used to transmit the PDSCH is not limited in this application. In other words, in this application, the first time-frequency resource may include N1 time-frequency resources, where N1 is greater than N. For example, the scenario in FIG. 7 is still used as an example. Two 5G SSBs may be separately configured on the carrier #1 and the carrier #2. In this case, the first time-frequency resource includes time-frequency resources of four 5G SSBs, that is, N1=4=2N. In addition, two downlink carriers in the four downlink carriers correspond to the time-frequency resources of the four 5G SBBs, the carrier #1 corresponds to time-frequency resources of two 5G SBBs, and the carrier #2 corresponds to time-frequency resources of two 5G SBBs.

It should be further understood that the foregoing descriptions are provided by using an example in which all carriers include same quantities of time-frequency resources that are not used to transmit the PDSCH. However, this is not limited in this application. All carriers may include same or different quantities of time-frequency resources that are not used to transmit the PDSCH. For example, the scenario in FIG. 7 is still used as an example. Two 5G SSBs may be configured on the carrier #1, and one 5G SSB may be configured on the carrier #2. In this case, the first time-frequency resource includes time-frequency resources of four 5G SSBs, that is, N1=4=2N. In addition, two downlink carriers in the four downlink carriers correspond to the time-frequency resources of the three 5G SBBs, the carrier #1 corresponds to time-frequency resources of two 5G SBBs, and the carrier #2 corresponds to a time-frequency resource of one 5G SBB.

Optionally, the M downlink carriers may be contiguous in frequency domain, or may be non-contiguous in frequency domain.

In this application, contiguous carriers mean that two carriers belong to a same frequency band and are contiguous in frequency domain. Non-contiguous carriers include two cases:
Case 1: Two carriers belong to a same frequency band but are not contiguous in frequency domain.
Case 2: Two carriers belong to different frequency bands.

The M downlink carriers may correspond to k frequency bands, where k is an integer less than or equal to M.

In an implementation, the M downlink carriers include a first carrier and a second carrier. The method 400 further includes: S430: The network device sends first carrier information and second carrier information to the first terminal device via the first RAT, and correspondingly, the first terminal device receives the first carrier information and the second carrier information.

The first carrier information indicates configurations/a configuration of an RBG and/or a PRG of the first carrier, and the second carrier information indicates configurations/a configuration of an RBG and/or a PRG of the second carrier.

Specifically, the first carrier information may indicate configurations/a configuration of an RBG and/or a PRG of a first carrier type, the second carrier information may indicate configurations/a configuration of an RBG and/or a PRG of a second carrier type, and the first carrier type is different from the second carrier type.

Optionally, in this implementation, the method 400 further includes: S440: Determine sizes/a size of the RBG and/or the PRG of the first carrier based on the first carrier information, and determine sizes/a size of the RBG and/or the PRG of the second carrier based on the second carrier information.

Based on the foregoing solution, the first carrier information and the second carrier information may indicate configurations of RBGs and/or PRGs of carriers of different carrier types. Further, configurations of RBGs and/or PRGs of a shared carrier and a non-shared carrier can be independent of each other.

It should be understood that the carrier types include a DSS carrier and a non-DSS (non-DSS) carrier. To implement multi-user multiple-input multiple-output (multi-user multiple-input multiple-output, MU-MIMO) on the shared carrier, the configurations/configuration of the RBG and/or the PRG on the shared carrier need/needs to be aligned with that of the second RAT. CRB0 locations of a same numerology of the first RAT and the second RAT need to be aligned, and RBGs and/or PRGs of the first terminal device and the second terminal device also need to be aligned. The configurations/configuration of the RBG and/or the PRG on the non-shared carrier may be configured based on a requirement of the first RAT. Therefore, the RBG and/or the PRG on the shared carrier and the RBG and/or the PRG on the non-shared carrier may be independently configured. In other words, the DSS carrier corresponds to one RBG and/or PRG configuration manner, and the non-DSS carrier corresponds to another RBG and/or PRG configuration manner.

For example, the scenario in FIG. 7 is still used as an example. It is assumed that bandwidths of the carrier #1, the carrier #2, the carrier #3, and the carrier #4 are all 20 MHz. If BWPs are configured on the carrier #1, the carrier #2, the carrier #3, and the carrier #4, RBG sizes (sizes) of the carrier #1 and the carrier #2 may be configured based on a shared 5G cell, and RBG sizes of the carrier #3 and the carrier #4 may be jointly determined. For example, the first terminal device determines that the RBG sizes configured for the carrier #1 and the carrier #2 are 4, and the RBG sizes configured for the carrier #3 and the carrier #4 are 8.

In an example, the first carrier information and the second carrier information are carrier types. For example, if the first carrier is a DSS carrier, and the second carrier is a non-DSS carrier, the first carrier information is the DSS carrier, and the second carrier information is the non-DSS carrier.

In an example, the first carrier information and the second carrier information are carrier groups. For example, if the first carrier is a DSS carrier, and the second carrier is a non-DSS carrier, the first carrier information is a carrier group 1, and the second carrier information is a carrier group 2. A carrier in the carrier group 1 is a DSS carrier, and a carrier in the carrier group 2 is a non-DSS carrier.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, a network device or a terminal device) in a conventional network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and operations implemented by a device (for example, the network device or the terminal device) may alternatively be implemented by a component (for example, a chip or a circuit) of the device.

The communication method provided in embodiments of this application is described above in detail with reference to FIG. 1 to FIG. 7. The communication method is mainly described from a perspective of interaction between the terminal device and the network device. It may be understood that, to implement the foregoing functions, the terminal device and the network device include corresponding hardware structures and/or software modules for performing the functions.

It may be understood that, to implement the functions in the foregoing embodiments, the terminal device and the network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 8 and FIG. 9 are block diagrams of possible communication apparatuses according to embodiments of this application. These communication apparatuses may be configured to implement functions of the first terminal device or the network device in the foregoing method embodiments, and therefore can also implement beneficial effects of the foregoing method embodiments. In embodiments of this application, each of the communication apparatuses may be the terminal 120 shown in FIG. 1, the network device 110 shown in FIG. 1, or a module (for example, a chip) used in the terminal or the network device.

As shown in FIG. 8, a communication apparatus 1200 includes a transceiver unit 1210. The transceiver unit 1210 may implement a corresponding communication function, and the transceiver unit 1210 may also be referred to as a communication interface or a communication unit. Optionally, the communication apparatus 1200 further includes a processing unit 1220, configured to process data. The communication apparatus 1200 is configured to implement a function of the first terminal device or the network device in the method embodiment shown in FIG. 6.

When the communication apparatus 1200 is configured to implement the function of the first terminal device in the method embodiment shown in FIG. 6, the transceiver unit 1210 is configured to: receive first information from the network device via a first RAT, and receive a PDSCH from the network device via the first RAT.

Optionally, the transceiver unit 1210 is further configured to receive first carrier information and second carrier information from the network device via the first RAT.

Optionally, the processing unit 1220 is configured to determine sizes/a size of an RBG and/or a PRG of a first carrier based on the first carrier information, and determine sizes/a size of an RBG and/or a PRG of a second carrier based on the second carrier information.

When the communication apparatus 1200 is configured to implement the function of the network device in the method embodiment shown in FIG. 6, the transceiver unit 1210 is configured to: send first information to the terminal device via a first RAT, and send a PDSCH to the terminal device via the first RAT.

Optionally, the transceiver unit 1210 is further configured to send first carrier information and second carrier information to the terminal device via the first RAT.

Optionally, the processing unit 1220 is configured to determine the first information, the first carrier information, the second carrier information, and the like.

For more detailed descriptions of the transceiver unit 1210 and the processing unit 1220, and meanings of terms such as the first information, the first carrier information, and the second carrier information, refer to descriptions in the method embodiment shown in FIG. 6.

As shown in FIG. 9, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330 for storing instructions executed by the processor 1310, input data needed by the processor 1310 to run instructions, or data generated after the processor 1310 runs instructions. Sometimes, the interface circuit 1320 may also be understood as a part of the processor 1310. In this case, the communication apparatus 1300 includes the processor 1310.

When the communication apparatus 1300 is configured to implement the method shown in FIG. 6, the processor 1310 is configured to implement a function of the processing unit 1220, and the interface circuit 1320 is configured to implement a function of the transceiver unit 1210.

When the communication apparatus is a chip used in a terminal, the chip in the terminal implements a function of the terminal in the foregoing method embodiments. That the chip in the terminal receives information from a network device may be understood as that the information is first received by another module (for example, a radio frequency module or an antenna) in the terminal, and then sent by the module to the chip in the terminal. That the chip in the terminal sends information to the network device may be understood as that the information is first sent to another module (for example, a radio frequency module or an antenna) in the terminal, and then sent to the network device by the module.

When the communication apparatus is a chip used in a network device, the chip in the network device implements a function of the network device in the foregoing method embodiments. That the chip in the network device receives information from a terminal may be understood as that the information is first received by another module (for example, a radio frequency module or an antenna) in the network device, and then sent by the module to the chip in the network device. That the chip in the network device sends information to the terminal may be understood as that the information is first sent to another module (for example, a radio frequency module or an antenna) in the network device, and then sent by the module to the terminal.

In this application, that an entity A sends information to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may alternatively exist in a base station or a terminal as discrete components.

All or some of the foregoing embodiments may be implemented by using software, hardware, firmware, or any combination thereof. When software is used to implement the embodiments, the embodiments may be completely or partially implemented in a form of a computer program product. The computer program product includes one or more computer programs or instructions. When the computer programs or the instructions are loaded and executed on a computer, the procedures or functions in embodiments of this application are completely or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In the foregoing embodiments, unless otherwise stated or there is a logic conflict, terms and/or descriptions in different embodiments are consistent and may be mutually referenced, and technical features in different embodiments may be combined based on an internal logical relationship thereof, to form a new embodiment.

In this specification, "at least one" means one or more. "A plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It should be understood that, in various embodiments of this application, first, second, and various numbers are merely for differentiation for ease of description, and are not for limiting the scope of embodiments of this application. Sequence numbers of the foregoing processes do not mean an execution sequence, and the execution sequence of the processes should be determined based on functions and internal logic of the processes.

## Claims

1. A communication method, comprising:
receiving first information from a network device via a first radio access technology RAT, wherein the first information indicates a time-frequency resource of a synchronization signal block SSB of a second RAT; and
receiving a physical downlink shared channel PDSCH from the network device via the first RAT, wherein the time-frequency resource of the SSB of the second RAT is not used to transmit the PDSCH.

2. The method according to claim 1, wherein the receiving the first information from the network device via the first RAT comprises:
receiving the first information via a first cell of the first RAT, wherein a frequency domain resource of the first cell comprises M downlink carriers, and M is an integer greater than 1.

3. The method according to claim 2, wherein the time-frequency resource of the SSB of the second RAT comprises time-frequency resources of N SSBs, the time-frequency resources of the N SSBs are in one-to-one correspondence with N downlink carriers in the M downlink carriers, and N is a positive integer.

4. The method according to claim 2 or 3, wherein the M downlink carriers comprise a first carrier and a second carrier, and the method further comprises:
receiving first carrier information and second carrier information from the network device via the first RAT, wherein the first carrier information indicates a configuration of a resource block group RBG or a precoding resource block group PRG of the first carrier, and the second carrier information indicates a configuration of an RBG or a PRG of the second carrier.

5. The method according to claim 4, wherein the first carrier information indicates a configuration of an RBG or a PRG of a first carrier type, the second carrier information indicates a configuration of an RBG or a PRG of a second carrier type, and the first carrier type is different from the second carrier type.

6. A communication method, comprising:
sending first information to a terminal device via a first RAT, wherein the first information indicates a time-frequency resource of an SSB of a second RAT; and
sending a PDSCH to the terminal device via the first RAT, wherein the time-frequency resource of the SSB of the second RAT is not used to transmit the PDSCH.

7. The method according to claim 6, wherein the sending the first information to the terminal device via the first RAT comprises:
sending the first information to the terminal device via a first cell of the first RAT, wherein a frequency domain resource of the first cell comprises M downlink carriers, and M is an integer greater than 1.

8. The method according to claim 7, wherein the time-frequency resource of the SSB of the second RAT comprises time-frequency resources of N SSBs, the time-frequency resources of the N SSBs are in one-to-one correspondence with N downlink carriers in the M downlink carriers, and N is a positive integer.

9. The method according to claim 7 or 8, wherein the M downlink carriers comprise a first carrier and a second carrier, and the method further comprises:
sending first carrier information and second carrier information to the terminal device via the first RAT, wherein the first carrier information indicates a configuration of an RBG or a PRG of the first carrier, and the second carrier information indicates a configuration of an RBG or a PRG of the second carrier.

10. The method according to claim 9, wherein the first carrier information indicates a configuration of an RBG or a PRG of a first carrier type, the second carrier information indicates a configuration of an RBG or a PRG of a second carrier type, and the first carrier type is different from the second carrier type.

11. A communication apparatus, comprising a module or a unit configured to perform the method according to any one of claims 1 to 5 or a module or a unit configured to perform the method according to any one of claims 6 to 10.

12. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 5 or the method according to any one of claims 6 to 10 by using a logic circuit or by executing code instructions.

13. A chip, comprising a processor, wherein the processor is coupled to a memory, the memory is configured to store a computer program, and the processor is configured to execute the computer program stored in the memory to implement the method according to any one of claims 1 to 5 or the method according to any one of claims 6 to 10.

14. A computer-readable storage medium, wherein the storage medium stores a computer program or instructions; and when the computer program or the instructions are executed by a communication apparatus, the method according to any one of claims 1 to 5 or the method according to any one of claims 6 to 10 is implemented.

15. A computer program product, comprising a computer program, wherein when the computer program is run, the method according to any one of claims 1 to 5 or the method according to any one of claims 6 to 10 is implemented.
